# FASCICULE DE BREVET EUROPEEN

(11) **EP 3 504 465 B1**
(45) Date de publication et mention de la délivrance du brevet: **04.11.2020**
(21) Numéro de dépôt: 17751798.4
(22) Date de dépôt: 11.07.2017
(51) Int. Cl.: F16H 7/02, F16H 57/01

(54) **PROCEDE DE PREVENTION D'UN RISQUE DE GLISSEMENT PAR GIVRAGE D'UNE COURROIE RELIANT UN ORGANE DE DEMARRAGE A UN MOTEUR**
VERFAHREN ZUM VERHINDERN, DASS EIN RIEMEN, DER EIN STARTERELEMENT MIT EINEM MOTOR VERBINDET, AUFGRUND VON EIS RUTSCHT
METHOD FOR PREVENTING A BELT THAT CONNECTS A STARTER MEMBER TO AN ENGINE FROM SLIPPING AS A RESULT OF ICE

(30) Priorité: 24.08.2016 FR 1657903
(43) Date de publication de la demande: 03.07.2019
(73) Titulaire: PSA Automobiles S.A., 78300 Poissy (FR)
(72) Inventeur: BOUCRAUT, Sébastien, 94130 Nogent Sur Marne (FR); MARCHYLLIE, Alexis, 33160 St Medard En Jalles (FR); DE BRAUER, Caroline, 78000 Versailles (FR); ANFRAY, Guillaume, 61700 Domfront (FR)
(86) Numéro de dépôt international: PCT/FR2017/051907
(87) Numéro de publication internationale: WO 2018/037172

(56) Documents cités:
- WO-A1-2016/113474
- FR-A1- 2 969 220
- FR-A1- 3 005 624

## Description

La présente invention porte sur un procédé de prévention d'un risque de glissement par givrage d'une courroie reliant un organe de démarrage à un moteur à combustion interne d'un véhicule automobile. L'organe de démarrage peut avantageusement être un alterno-démarreur. On connait du document WO2016113474A1 un tel procédé de démarrage quand la température extérieure est basse.

La présente invention trouve une application préférentielle pour des véhicules hybrides comportant un moteur autre qu'un moteur à combustion interne. De tels véhicules hybrides peuvent être des véhicules dans lesquels le moteur à combustion et le moteur électrique sont tous deux des moteurs de propulsion, fonctionnant alternativement ou simultanément, ou encore des véhicules dans lesquels le moteur à combustion a pour rôle d'entraîner un alternateur lequel recharge une batterie d'alimentation du moteur électrique de propulsion.

La présente invention trouve aussi une application préférentielle pour des véhicules hybrides ou non munis d'un système d'arrêt et de redémarrage automatiques du moteur à combustion interne.

Pour un véhicule hybride, il est fréquent que, pendant le roulage, des phases de propulsion avec le moteur à combustion interne suivent des phases de propulsion avec l'autre moteur. De même, dans un système d'arrêt et de redémarrage automatiques du moteur à combustion interne, des phases d'arrêt et redémarrage automatiques du moteur à combustion interne sont mises en oeuvre notamment en cas d'arrêt momentané du véhicule.

Un moteur à combustion interne entraîne un arbre de sortie de vilebrequin pour l'entraînement des roues motrices du véhicule automobile. Lors d'un démarrage assisté, la transmission de mouvement entre l'arbre de sortie d'un organe de démarrage, par exemple un alterno-démarreur, et l'arbre de sortie de vilebrequin est généralement réalisé par adhérence entre une courroie d'accessoires et des poulies de l'arbre de sortie de vilebrequin et de l'arbre de sortie de l'organe de démarrage. Une telle courroie dite d'accessoires est en général plate et dépourvue de crans ou de dents.

Une telle courroie peut patiner. Le patinage de la courroie peut se produire lorsque la courroie est très humide, par exemple lors de fortes pluies ou de grandes projections d'eau. L'adhérence entre la courroie et les poulies du vilebrequin et de l'alterno-démarreur est alors insuffisante. Ainsi, dans ces conditions quand le moteur thermique procède à un démarrage assisté, la poulie de l'arbre d'alterno-démarreur peut patiner sur la courroie et l'alterno-démarreur ne parvient pas à mettre en oeuvre un démarrage assisté.

Ceci est aussi le cas pour une courroie givrée. Comme, à chaque démarrage, c'est prioritairement l'organe de démarrage relié par une courroie au moteur à combustion interne qui travaille, il s'ensuit qu'il est important que la courroie remplisse son rôle en ne glissant pas entre les poulies.

On connaît le principe consistant à détecter un risque de glissement de la courroie d'entraînement du moteur à combustion par l'alterno-démarreur. Un tel risque de glissement est par exemple détecté en comparant le régime du moteur et le régime de l'alterno-démarreur. On interdit ensuite un arrêt automatique du moteur à combustion en cas de risque de glissement. Ce principe est proposé notamment dans le document FR2965880A1. On connait encore du document FR2969220A1 un procédé de démarrage quand la température extérieure est basse.

Néanmoins, ce type de détection de glissement est coûteux à mettre en œuvre et produit une détection de risque de glissement dont la fiabilité est limitée. Ainsi l'estimation du glissement potentiel de la courroie d'accessoire n'est pas fiable dans tous les cas de vie, et, pour toujours garantir le redémarrage, le système de détection du glissement surestime le risque de glissement de la courroie. Il en résulte une disponibilité des phases d'arrêt du moteur qui est réduite par rapport au potentiel réel.

Si le problème des courroies humides risquant de patiner est connu de l'état de la technique, il y a peu de documents concernant ce problème pour les courroies givrées qui présentent pourtant un plus grand risque de patinage que les courroies humides.

Il a été proposé d'interdire l'arrêt et le redémarrage d'un moteur à combustion interne dès que la température extérieure descend en dessous de 0°C. Ceci est cependant trop sélectif étant donné que la courroie est présente dans l'espace en dessous du capot du véhicule automobile, cet espace logeant aussi le moteur et étant chauffé par le moteur, donc généralement plus chaud que la température extérieure. On se retrouve dans le cas d'une surestimation du risque de glissement d'une courroie givrée qui diminue la disponibilité des phases d'arrêt du moteur par rapport à ce qui serait nécessaire.

Par conséquent, le problème à la base de la présente invention est de mettre en œuvre une prévention du risque de givrage d'une courroie reliant un organe de démarrage à un moteur à combustion interne.

Pour atteindre cet objectif, il est prévu selon l'invention un procédé de prévention d'un risque de glissement d'une courroie reliant un organe de démarrage à un moteur à combustion interne d'un véhicule automobile, le risque de glissement étant susceptible d'être produit par un dépôt de givre sur la courroie, caractérisé en ce que le procédé comprend une estimation ou une mesure d'une température de la courroie à un instant donné et si la température de la courroie estimée ou mesurée est inférieure à un seuil de température calibrable au moins inférieure à 0°C àcet instant donné, il est procédé, quand le moteur à combustion interne est tournant, à une interdiction d'arrêt du moteur à combustion interne ou, quand le moteur à combustion interne est à l'arrêt, à une interdiction d'un démarrage du moteur à combustion interne par l'organe de démarrage associé à la courroie.

L'effet technique est d'obtenir une prévention du risque adaptée à la température estimée ou mesurée de la courroie qui est différente de la température extérieure du fait de l'action de chauffage exercée par le moteur. La température de la courroie n'est égale à la température extérieure seulement dans le cas très spécifique d'un long arrêt du moteur à combustion interne ayant permis son refroidissement : il y a alors un sensible alignement de la température de la courroie sur la température extérieure.

Par contre, dans un cadre courant d'utilisation, la température de la courroie est plus élevée que la température extérieure. La création de givre ne se fera que si la courroie présente une température inférieure à 0°C. C'est ce critère au plus proche des conditions réelles qu'applique le procédé de prévention selon la présente invention.

Il est bien entendu nécessaire que la courroie soit au moins légèrement humide. Le seuil de 0°C peut être calibré selon des paramètres extérieurs pour suivre au mieux les conditions réelles affectant la courroie.

Avantageusement, il est effectué une estimation d'une quantité d'eau retenue sur la courroie, la quantité d'eau devant être supérieure à un seuil minimal pour une interdiction d'arrêt ou de démarrage du moteur à combustion interne. Il est en effet nécessaire que la courroie soit humide pour qu'elle puisse givrer. Le type de projection d'eau que la courroie a reçu peut aussi faire varier sa capacité à givrer. Par exemple, de fines gouttelettes d'eau projetées sur la courroie sont plus favorables à son givrage qu'une grande quantité d'eau. Le seuil minimal peut donc être défini selon des expérimentations de givrage de la courroie pour différentes températures extérieures et de courroie, différentes quantités d'eau en changeant la forme d'apport de l'eau.

Avantageusement, quand la température de la courroie est estimée, l'estimation tient compte d'une température ambiante dans l'environnement de la courroie et le seuil de température est au moins calibrable par rapport à une hygrométrie de l'air extérieur. La température de la courroie peut être mesurée ou estimée. Une mesure se fait par un capteur de température et implique un certain prix. De plus, le capteur de température peut être endommagé. Par contre, l'estimation est un traitement purement logiciel pour la connaissance de la température et ne demande pas l'utilisation d'élément physique additionnel à proximité de la courroie.

L'hygrométrie est un facteur prépondérant dans le givrage de la courroie, une hygrométrie élevée entraînant une facilité de givrage de la courroie. La température ambiante dans l'environnement immédiat de la courroie, donc dans un espace sous capot du véhicule automobile, est une température différente de la température extérieure ambiante et peut permettre une estimation assez précise de la température de la courroie, surtout quand il n'y a pas de circulation d'air dans l'espace sous capot.

Avantageusement, quand le moteur à combustion interne est tournant, la courroie et le moteur étant logés dans un espace sous capot comportant une façade de refroidissement traversée par un flux d'air provenant de l'extérieur du véhicule à une vitesse donnée et pénétrant dans l'espace sous capot, la température ambiante dans l'environnement de la courroie est estimée en fonction d'au moins un des paramètres suivants : la vitesse donnée de flux d'air, la température extérieure de l'air, la température du moteur et le régime moteur. La température ambiante dans l'environnement de la courroie est la température de l'air sous capot, cet air ayant pénétré par une ouverture dans la façade de refroidissement, ayant ensuite servi au refroidissement d'un ou de plusieurs radiateurs d'un groupe moto-ventilateur en aval de la façade puis ayant été réchauffé par le moteur à combustion interne.

Avantageusement, quand le moteur à combustion interne est à l'arrêt, le véhicule automobile étant roulant ou à l'arrêt, la courroie et le moteur étant logés dans un espace sous capot comportant une façade de refroidissement traversée par un flux d'air provenant de l'extérieur du véhicule et pénétrant dans l'espace sous capot à une vitesse donnée, cette vitesse étant sensiblement nulle quand le véhicule est à l'arrêt, la température ambiante dans l'environnement de la courroie est estimée en fonction d'au moins un des paramètres suivants : la vitesse donnée de flux d'air, la température extérieure de l'air, la température du moteur, la durée écoulée depuis un début de l'arrêt du moteur et la durée du dernier roulage du véhicule précédant l'arrêt du moteur à combustion interne.

A l'arrêt du moteur, la température du moteur décroît sensiblement en tenant compte de l'inertie thermique du moteur. Il va en être de même pour l'air sous capot et pour les éléments comme la courroie disposés à proximité du moteur. La ventilation de l'air sous capot est relativement faible. Plus le véhicule a roulé longtemps et plus son moteur a atteint sa température de fonctionnement optimal. La situation moteur à l'arrêt et véhicule roulant ne vaut que pour un véhicule hybride avec un moteur autre que le moteur à combustion interne.

Avantageusement, quand le véhicule automobile roule sur une route humide ne permettant pas à la courroie de sécher, la quantité d'eau estimée sur la courroie est fonction d'au moins un des paramètres suivants : la vitesse du véhicule, une quantité d'eau sur la route estimée selon un capteur de pluie et une vitesse des essuies glaces du véhicule et une estimation d'un brouillard d'eau produit par le passage d'un autre véhicule automobile précédant le véhicule automobile sur la route, avec, quand ces paramètres sont pris en commun, une pondération plus forte accordée à l'estimation du brouillard d'eau. Ces paramètres représentent les grandes sources de projection d'eau sur la courroie. Un brouillard d'eau est plus favorable au givrage qu'une projection d'eau. Il s'ensuit qu'au moins un de ces paramètres peut être pondéré pour avoir plus d'importance que d'autres paramètres pris en considération.

Avantageusement, quand le véhicule est à l'arrêt ou quand le véhicule automobile roule sur une route devenue sèche ou suffisamment peu humide pour permettre à la courroie de sécher et de dégivrer, le moteur à combustion interne tournant ou non, la quantité d'eau estimée sur la courroie est fonction d'au moins un des paramètres suivants : la température du moteur, la température de l'air dans l'espace sous capot, l'hygrométrie de l'air dans un espace sous capot, une durée écoulée depuis l'instant d'arrêt du véhicule ou l'instant de roulage sur une route sèche ou suffisamment peu humide et la vitesse de l'air dans un espace sous capot.

Avantageusement, quand la température de la courroie devient supérieure à un seuil de température calibrable supérieur à 0°C ou à une fin d'une durée minimale de latence après l'interdiction, cette durée minimale de latence étant calibrable selon la température extérieure et/ou la température de la courroie, il est procédé à l'annulation de l'interdiction d'arrêt ou de démarrage par l'organe de démarrage associé à la courroie du moteur à combustion interne. Le temps minimal de latence permet de tenir de l'inertie thermique dans l'espace sous capot pour le réchauffement de la courroie. Ce temps minimal permet aussi à la courroie de monter à une température fortement au-dessus de 0°C, par exemple à plus de 50°C et donc de rester plus longtemps, moteur arrêté, à une température au-dessus du seuil de température au moins inférieure à 0°C même quand la température extérieure est négative.

L'invention concerne un véhicule automobile comprenant au moins un moteur à combustion interne et un organe de démarrage avec une courroie reliant l'organe de démarrage au moteur à combustion interne, une unité de contrôle-commande pilotant l'organe de démarrage et le moteur à combustion interne, caractérisé en ce que l'unité de contrôle-commande met en œuvre un tel procédé de prévention en présentant des moyens de mesure ou d'estimation de la température de la courroie, des moyens de comparaison de la température mesurée ou estimée de la courroie avec un seuil de température calibrable au moins inférieure à 0°C mémorisé et des moyens d'interdiction d'arrêt ou de démarrage du moteur à combustion interne par l'organe de démarrage associé à la courroie.

Avantageusement, le véhicule automobile est un véhicule hybride avec un moteur de propulsion du véhicule autre que le moteur à combustion interne ou un véhicule équipé d'un système d'arrêt et de redémarrage automatiques du moteur à combustion interne, le véhicule présentant un démarreur autre que l'organe de démarrage associé à la courroie, l'organe de démarrage étant un alterno-démarreur.

D'autres caractéristiques, buts et avantages de la présente invention apparaîtront à la lecture de la description détaillée qui va suivre et au regard des dessins annexés donnés à titre d'exemples non limitatifs et sur lesquels :

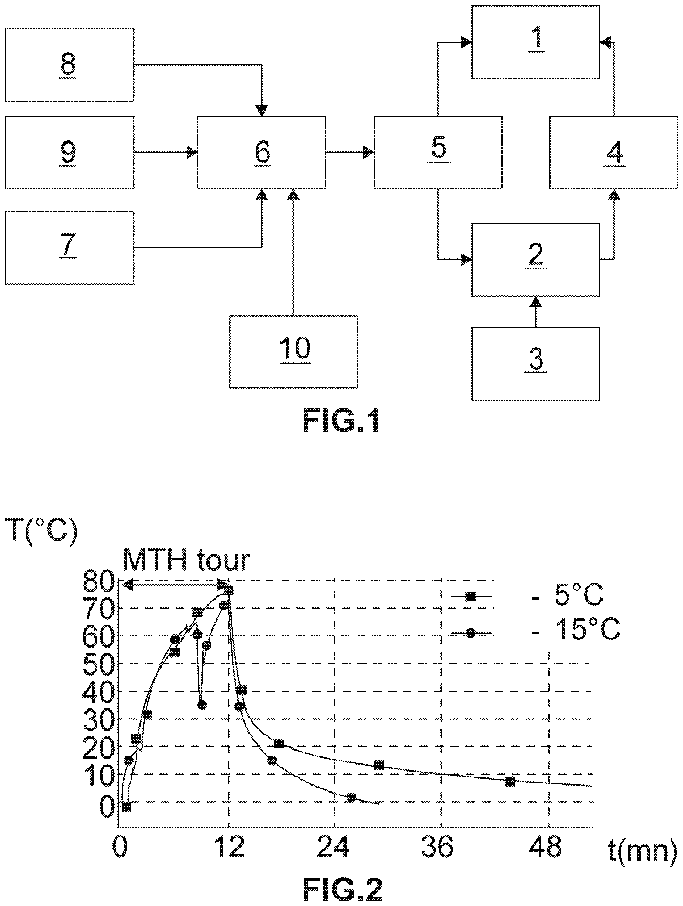

- la figure 1 est une représentation schématique d'un logigramme d'un mode de réalisation du procédé de prévention d'un risque de givrage d'une courroie reliant un organe de démarrage à un moteur à combustion interne selon la présente invention,
- la figure 2 est une représentation schématique de deux courbes de température de courroie en fonction du temps pour deux températures extérieures au véhicule différentes, les courbes illustrant une autorisation d'arrêt d'un moteur à combustion interne après levée d'une interdiction d'arrêt suite à un risque de givrage d'une courroie reliant un organe de démarrage à un moteur à combustion interne, dans une étape préférentielle du procédé selon la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

En se référant à la figure 1, un moteur à combustion interne porte la référence 1, un organe de démarrage, avantageusement un alterno-démarreur, porte la référence 2, une batterie du véhicule étant référencée 3. La courroie d'entraînement reliant l'organe de démarrage 2 au moteur 1 est référencée 4.

La présente invention concerne un procédé de prévention d'un risque de glissement d'une courroie 4 reliant un organe de démarrage 2 à un moteur 1 à combustion interne d'un véhicule automobile, le risque de glissement étant susceptible d'être produit par un dépôt de givre sur la courroie 4.

Selon l'invention, le procédé comprend une estimation ou une mesure 10 d'une température de la courroie 4 à un instant donné. Si la température de la courroie 4 estimée ou mesurée est inférieure à un seuil de température calibrable au moins inférieure à 0°C à cet instant donné, il est procédé, quand le moteur 1 à combustion interne est tournant, à une interdiction d'arrêt du moteur 1 à combustion interne ou, quand le moteur 1 à combustion interne est à l'arrêt, à une interdiction d'un démarrage du moteur 1 à combustion interne par l'organe de démarrage 2 associé à la courroie 4.

A la figure 1, ceci est fait par un module d'estimation ou de mesure de la température 10 de la courroie 4 envoyant cette information à un coordinateur 5 d'arrêt et de redémarrage du moteur 1 à combustion interne via un module estimateur 6 de courroie 4 glissante. Le coordinateur 5 a pour rôle d'envoyer des ordres d'arrêt et de redémarrage au moteur 1 et des ordres de redémarrage à l'organe de démarrage 2 associé à la courroie 4, avantageusement un alterno-démarreur.

Il peut être effectué une estimation d'une quantité d'eau 7 à 9 retenue sur la courroie 4, la quantité d'eau devant être supérieure à un seuil minimal pour une interdiction d'arrêt ou de démarrage du moteur 1 à combustion interne. Ceci est représenté par les modules 7 à 9 qui seront ultérieurement plus précisément détaillés.

L'estimateur de courroie 4 glissante par givrage 6 est relié, d'une part, aux modules 7 à 9 pour l'estimation de la quantité d'eau et, d'autre part, au module d'estimation ou de mesure de la température 10 de la courroie 4.

Quand la température de la courroie 4 est estimée et non mesurée par le module d'estimation ou de mesure de la température 10 de la courroie 4, l'estimation peut tenir compte d'une température ambiante dans l'environnement de la courroie 4 et le seuil de température est au moins calibrable par rapport à une hygrométrie de l'air extérieur.

La courroie 4 et le moteur 1 peuvent être logés dans un espace sous capot comportant une façade de refroidissement traversée par un flux d'air provenant de l'extérieur du véhicule à une vitesse donnée et pénétrant dans l'espace sous capot.

Quand le moteur 1 à combustion interne est tournant, la température ambiante dans l'environnement de la courroie 4 peut être estimée en fonction d'au moins un des paramètres suivants : la vitesse de flux d'air dans le sous capot, la température extérieure de l'air, la température du moteur 1 et le régime moteur. Le flux d'air concourt plutôt à une baisse de température dans l'espace sous capot tandis que le moteur 1 tournant contribue plutôt à une hausse de température dans l'espace sous capot.

Quand le moteur 1 est tournant, le moteur 1 chauffe l'espace sous capot et donc la courroie 4. Si le véhicule est en déplacement, de l'air froid rentre dans l'espace sous capot par une ouverture de la façade de refroidissement. Comme le moteur 1 présente une inertie thermique forte, la température se stabilise dans l'espace sous capot. Il s'ensuit que la température ambiante dans l'environnement de la courroie 4 donne une estimation fidèle de la température de la courroie 4.

Si le véhicule n'est pas en déplacement, le moteur 1 toujours tournant, la vitesse du flux d'air est proche de zéro. Il n'y a donc pas de ventilation d'air dans le sous capot et ceci est favorable à une augmentation progressive de température de la courroie 4.

Quand le moteur 1 à combustion interne est à l'arrêt, le véhicule automobile étant roulant ou à l'arrêt, la température ambiante dans l'environnement de la courroie 4 est estimée en fonction d'au moins un des paramètres suivants : la vitesse de flux d'air dans le sous capot, la température extérieure de l'air, la température du moteur 1, la durée écoulée depuis un début de l'arrêt du moteur 1 et la durée du dernier roulage du véhicule précédant l'arrêt du moteur 1 à combustion interne.

Dans cas, le moteur 1 à combustion étant à l'arrêt, le moteur 1 perd des calories et sa température diminue progressivement. La température ambiante dans le sous capot peut donc aussi diminuer. Par exemple, un moteur 1 à combustion peut se refroidir complètement pendant 90 minutes et donc effectuer un chauffage de plus en plus modéré de l'espace sous capot pendant cette durée.

Quand le véhicule automobile roule sur une route humide ne permettant pas à la courroie 4 de sécher, la quantité d'eau estimée sur la courroie 4 peut être fonction d'au moins un des paramètres suivants : la vitesse du véhicule, une quantité d'eau sur la route estimée selon un capteur de pluie et une vitesse des essuies glaces du véhicule et une estimation d'un brouillard d'eau produit par le passage d'un autre véhicule automobile précédant le véhicule automobile sur la route. Quand ces paramètres sont pris en commun, une pondération plus forte est accordée à l'estimation du brouillard d'eau.

Le module 7 illustre un capteur de pluie ou de vitesses d'essuies glaces. Le module 8 illustre un capteur de vitesse de véhicule et le module 9 illustre un capteur de distance inter-véhicule permettant d'estimer le brouillard d'eau reçu du véhicule précédent.

Quand le véhicule est à l'arrêt ou quand le véhicule automobile roule sur une route devenue sèche ou suffisamment peu humide pour permettre à la courroie 4 de sécher et de dégivrer, le moteur 1 à combustion interne tournant ou non, la quantité d'eau estimée sur la courroie 4 peut être fonction d'au moins un des paramètres suivants : la température du moteur 1, la température de l'air dans l'espace sous capot, l'hygrométrie de l'air dans un espace sous capot, une durée écoulée depuis l'instant d'arrêt du véhicule ou l'instant de roulage sur une route sèche ou suffisamment peu humide et la vitesse de l'air dans un espace sous capot.

Dans ce cas, la quantité d'eau sur la courroie 4 baisse plus ou moins fortement. Il peut alors être envisagé de suspendre l'interdiction d'arrêt ou de redémarrage du moteur 1 par l'organe de démarrage 2 associé à la courroie 4.

Par exemple, quand la température de la courroie 4 devient supérieure à un seuil de température calibrable supérieur à 0°C ou à unefin d'une durée minimale de latence après l'interdiction, cette durée minimale de latence étant calibrable selon la température extérieure et/ou la température de la courroie 4, il peut être procédé à l'annulation de l'interdiction d'arrêt ou de démarrage par l'organe de démarrage 2 associé à la courroie 4 du moteur 1 à combustion interne.

Ceci vaut surtout par un maintien du moteur 1 à combustion interne tournant, ce qui chauffe l'air sous capot et augmente la température ambiante dans l'environnement de la courroie 4 et la température de la courroie 4 en conséquence.

A la figure 2 tout en se référant à la figure 1 pour les références non mentionnées à la figure 2, il est illustré deux courbes de température de courroie 4 avec respectivement une température extérieure de -15°C et de -5°C. Il est laissé le moteur 1 à combustion interne tournant MTH tour pendant environ 12 à 15 minutes. La courbe avec des cercles correspond à une température extérieure de -15°C et la courbe avec des carrés correspond à une température extérieure de - 5°C.

La courbe pour -15°C de température de counoie 4 décroît bien entendu plus rapidement que la courbe de - 5°C après l'arrêt du moteur 1. A la figure 2, qui n'est pas limitative mais purement illustrative, après environ 12 à 15 minutes de moteur 1 tournant MTH tour avec une température de courroie 4 à la fin de cette durée d'environ 80°C, après arrêt du moteur 1 à combustion interne, pour la courbe à -15°C de température extérieure, la courroie 4 retrouve la température de 0°C après environ un peu moins de 20 minutes, 10°C après 6 minutes et 20°C après 3 minutes.

Pour la courbe de - 5°C de température extérieure, la courroie 4 retrouve la température de 0°C après plus de 50 minutes, 10°C après un peu plus de 25 minutes et 20°C après 6 minutes.

La durée de moteur 1 tournant MTH sert au séchage et dégivrage de la courroie 4 et correspond à la durée de latence. Pour un véhicule hybride, il peut être autorisé après cette durée une courte période de roulage par propulsion autre par le moteur 1 à combustion interne mais cette période doit être limitée notamment par température extérieure très basse, étant donné que la température de courroie 4 de 0°C est vite atteinte à nouveau.

L'invention concerne un véhicule automobile comprenant au moins un moteur 1 à combustion interne et un organe de démarrage 2 avec une courroie 4 reliant l'organe de démarrage 2 au moteur 1 à combustion interne, une unité de contrôle-commande pilotant l'organe de démarrage 2 et le moteur 1 à combustion interne.

Selon l'invention, l'unité de contrôle-commande met en œuvre un tel procédé de prévention en présentant des moyens de mesure ou d'estimation de la température de la courroie 4, des moyens de comparaison de la température mesurée ou estimée de la courroie 4 avec une température de référence d'au moins 0°C et des moyens d'interdiction d'arrêt ou de démarrage du moteur 1 à combustion interne par l'organe de démarrage 2 associé à la courroie 4.

Comme précédemment mentionné, le véhicule automobile peut être un véhicule hybride avec un moteur de propulsion du véhicule autre que le moteur 1 à combustion interne ou un véhicule équipé d'un système d'arrêt et de redémarrage automatiques du moteur à combustion interne, le véhicule présentant un démarreur autre que l'organe de démarrage 2 associé à la courroie 4.

L'organe de démarrage 2 est de préférence un alterno-démarreur. Un autre démarreur peut être utilisé en remplacement de l'organe de démarrage 2 associé à la courroie 4 pendant son interdiction de démarrage.

## Revendications

1. Procédé de prévention d'un risque de glissement d'une courroie (4) reliant un organe de démarrage (2) à un moteur (1) à combustion interne d'un véhicule automobile, le risque de glissement étant susceptible d'être produit par un dépôt de givre sur la courroie (4), **caractérisé en ce que** le procédé comprend une estimation ou une mesure (10) d'une température de la courroie (4) à un instant donné et si la température de la courroie (4) estimée ou mesurée est inférieure à un seuil de température calibrable au moins inférieure à 0°C à cet instant donné, il est procédé, quand le moteur (1) à combustion interne est tournant, à une interdiction d'arrêt du moteur (1) à combustion interne ou, quand le moteur (1) à combustion interne est à l'arrêt, à une interdiction d'un démarrage du moteur (1) à combustion interne par l'organe de démarrage (2) associé à la courroie (4).

2. Procédé de prévention selon la revendication 1, dans lequel il est effectué une estimation d'une quantité d'eau (7 à 9) retenue sur la courroie (4), la quantité d'eau devant être supérieure à un seuil minimal pour une interdiction d'arrêt ou de démarrage du moteur (1) à combustion interne.

3. Procédé de prévention selon la revendication 2, dans lequel, quand la température de la courroie (4) est estimée, l'estimation tient compte d'une température ambiante dans l'environnement de la courroie (4) et le seuil de température est au moins calibrable par rapport à une hygrométrie de l'air extérieur.

4. Procédé de prévention selon la revendication 3, dans lequel, quand le moteur (1) à combustion interne est tournant, la courroie (4) et le moteur (1) étant logés dans un espace sous capot comportant une façade de refroidissement traversée par un flux d'air provenant de l'extérieur du véhicule à une vitesse donnée et pénétrant dans l'espace sous capot, la température ambiante dans l'environnement de la courroie (4) est estimée en fonction d'au moins un des paramètres suivants : la vitesse donnée de flux d'air, la température extérieure de l'air, la température du moteur (1) et le régime moteur.

5. Procédé de prévention selon la revendication 3, dans lequel, quand le moteur (1) à combustion interne est à l'arrêt, le véhicule automobile étant roulant ou à l'arrêt, la courroie (4) et le moteur (1) étant logés dans un espace sous capot comportant une façade de refroidissement traversée par un flux d'air provenant de l'extérieur du véhicule et pénétrant dans l'espace sous capot à une vitesse donnée, cette vitesse étant sensiblement nulle quand le véhicule est à l'arrêt, la température ambiante dans l'environnement de la courroie (4) est estimée en fonction d'au moins un des paramètres suivants : la vitesse donnée de flux d'air, la température extérieure de l'air, la température du moteur (1), la durée écoulée depuis un début de l'arrêt du moteur (1) et la durée du dernier roulage du véhicule précédant l'arrêt du moteur (1) à combustion interne.

6. Procédé de prévention selon l'une quelconque des revendications 2 à 5, dans lequel, quand le véhicule automobile roule sur une route humide ne permettant pas à la courroie (4) de sécher, la quantité d'eau estimée sur la courroie (4) est fonction d'au moins un des paramètres suivants : la vitesse du véhicule (8), une quantité d'eau sur la route estimée selon un capteur de pluie et une vitesse des essuies glaces du véhicule (7) et une estimation d'un brouillard d'eau (9) produit par le passage d'un autre véhicule automobile précédant le véhicule automobile sur la route, avec, quand ces paramètres sont pris en commun, une pondération plus forte accordée à l'estimation du brouillard d'eau (9).

7. Procédé de prévention selon l'une quelconque des revendications 2 à 5, dans lequel, quand le véhicule est à l'arrêt ou quand le véhicule automobile roule sur une route devenue sèche ou suffisamment peu humide pour permettre à la courroie (4) de sécher et de dégivrer, le moteur (1) à combustion interne tournant ou non, la quantité d'eau estimée sur la courroie (4) est fonction d'au moins un des paramètres suivants : la température du moteur (1), la température de l'air dans un espace sous capot, l'hygrométrie de l'air dans un espace sous capot, une durée écoulée depuis l'instant d'arrêt du véhicule ou l'instant de roulage sur une route sèche ou suffisamment peu humide et la vitesse de l'air dans un espace sous capot.

8. Procédé de prévention selon l'une quelconque des revendications précédentes, dans lequel, quand la température de la courroie (4) devient supérieure à un seuil de température calibrable supérieur à 0°C ou à une fin d'une durée minimale de latence après l'interdiction, cette durée minimale de latence étant calibrable selon la température extérieure et/ou la température de la courroie (4), il est procédé à l'annulation de l'interdiction d'arrêt ou de démarrage par l'organe de démarrage (2) associé à la courroie (4) du moteur (1) à combustion interne.

9. Véhicule automobile comprenant au moins un moteur (1) à combustion interne et un organe de démarrage (2) avec une courroie (4) reliant l'organe de démarrage (2) au moteur (1) à combustion interne, une unité de contrôle-commande pilotant l'organe de démarrage (2) et le moteur (1) à combustion interne, **caractérisé en ce que** l'unité de contrôle-commande met en œuvre un procédé de prévention selon l'une quelconque des revendications précédentes en présentant des moyens de mesure ou d'estimation de la température de la courroie (4), des moyens de comparaison de la température mesurée ou estimée de la courroie (4) avec un seuil de température calibrable au moins inférieure à 0°C mémorisé et des moyens d'interdiction d'arrêt ou de démarrage du moteur (1) à combustion interne par l'organe de démarrage (2) associé à la courroie (4).

10. Véhicule automobile selon la revendication 9, lequel est un véhicule hybride avec un moteur de propulsion du véhicule autre que le moteur (1) à combustion interne ou un véhicule équipé d'un système d'arrêt et de redémarrage automatiques du moteur à combustion interne, le véhicule présentant un démarreur autre que l'organe de démarrage (2) associé à la courroie (4), l'organe de démarrage (2) étant un alterno-démarreur.

## Patentansprüche

1. Verfahren zur Verhinderung der Rutschgefahr eines Riemens (4), der ein Anlasserelement (2) mit einem Verbrennungsmotor (1) eines Kraftfahrzeugs verbindet, wobei die Rutschgefahr besteht durch eine Frostablagerung auf dem Riemen (4), **gekennzeichnet dadurch, dass** das Verfahren eine Schätzung oder Messung (10) einer Temperatur des Riemens (4) zu einem bestimmten Zeitpunkt umfasst und wenn die Temperatur des Riemens (4)) geschätzt oder gemessen liegt zu diesem Zeitpunkt unter einem kalibrierbaren Temperaturschwellenwert von mindestens unter 0°C. Wenn der Verbrennungsmotor (1) läuft, ist es verboten, den Motor (1) abzustellen) Verbrennung oder, wenn der Verbrennungsmotor (1) gestoppt ist, das Starten des Verbrennungsmotors (1) durch die dem Riemen zugeordnete Startvorrichtung (2) (4).

2. Präventionsverfahren nach Anspruch 1, wobei eine Schätzung einer auf dem Riemens (4) zurückgehaltenen Wassermenge (7 bis 9) vorgenommen wird, wobei die Wassermenge größer als ein Mindestschwellenwert für ein Verbot sein muss. Stoppen oder Starten des Verbrennungsmotors (1).

3. Verhinderungsverfahren nach Anspruch 2, wobei beim Schätzen der Temperatur des Riemens (4) die Schätzung eine Umgebungstemperatur in der Umgebung des Riemens (4) berücksichtigt und die Temperaturschwelle bei liegt weniger kalibrierbar im Vergleich zu einer Hygrometrie der Außenluft.

4. Verhinderungsverfahren nach Anspruch 3, wobei, wenn der Verbrennungsmotor (1) läuft, der Riemen (4) und der Motor (1) in einem Raum unter der Haube untergebracht sind, der eine Kühlfront umfasst, durch die eine Strömung fließt. Wenn die Luft mit einer bestimmten Geschwindigkeit von außerhalb des Fahrzeugs in den Raum unter der Motorhaube gelangt, wird die Umgebungstemperatur in der Umgebung des Riemens (4) als Funktion mindestens eines der folgenden Parameter geschätzt: gegebene Luftströmungsgeschwindigkeit, Außenlufttemperatur, Motortemperatur (1) und Motordrehzahl.

5. Verhinderungsverfahren nach Anspruch 3, wobei, wenn der Verbrennungsmotor (1) stationär ist, das Kraftfahrzeug läuft oder stationär ist, der Riemen (4) und der Motor (1) untergebracht sind in einem Raum unter der Motorhaube, der eine Kühlfassade umfasst, die von einem Luftstrom durchzogen wird, der von außerhalb des Fahrzeugs kommt und mit einer gegebenen Geschwindigkeit in den Raum unter der Motorhaube eintritt, wobei diese Geschwindigkeit im Wesentlichen Null ist, wenn das Fahrzeug steht Die Umgebungstemperatur in der Umgebung des Riemens (4) wird als Funktion mindestens eines der folgenden Parameter geschätzt: die gegebene Luftströmungsgeschwindigkeit, die Außenlufttemperatur, die Motortemperatur (1)), die seit dem Start der Motorabschaltung (1) verstrichene Zeit und die Zeit, zu der das Fahrzeug zuletzt gefahren wurde, bevor der Verbrennungsmotor (1) abgestellt wurde.

6. Verhinderungsverfahren nach einem der Ansprüche 2 bis 5, wobei, wenn das Kraftfahrzeug auf einer nassen Straße fährt, auf der der Riemen (4) nicht austrocknen kann, die geschätzte Wassermenge auf dem Riemen (4) ist eine Funktion von mindestens einem der folgenden Parameter: die Geschwindigkeit des Fahrzeugs (8), eine gemäß einem Regensensor geschätzte Wassermenge auf der Straße und eine Geschwindigkeit der Scheibenwischer des Fahrzeugs (7) und eine Schätzung von a Wassernebel (9), der durch den Durchgang eines anderen Kraftfahrzeugs vor dem Kraftfahrzeug auf der Straße erzeugt wird, wobei, wenn diese Parameter zusammengenommen werden, die Schätzung des Wassernebels stärker gewichtet wird (9).

7. Verhinderungsverfahren nach einem der Ansprüche 2 bis 5, wobei, wenn das Fahrzeug steht oder wenn das Kraftfahrzeug auf einer Straße fährt, die trocken geworden ist oder eine ausreichend niedrige Feuchtigkeit aufweist, um das Trocknen des Riemens (4) zu ermöglichen und Abtauen bei laufendem oder nicht laufendem Verbrennungsmotor (1) ist die geschätzte Wassermenge auf dem Riemen (4) eine Funktion von mindestens einem der folgenden Parameter: die Temperatur des Motors (1), die Temperatur von die Luft in einem Raum unter der Motorhaube, die Hygrometrie der Luft in einem Raum unter der Motorhaube, die Zeit, die seit dem Anhalten des Fahrzeugs verstrichen ist, oder der Moment der Fahrt auf einer trockenen Straße mit ausreichender Luftfeuchtigkeit und die Luftgeschwindigkeit in einem Raum unter der Haube.

8. Verhinderungsverfahren nach einem der vorhergehenden Ansprüche, wobei, wenn die Temperatur des Riemens (4) größer als eine kalibrierbare Temperaturschwelle größer als 0°C wird oder am Ende einer minimalen Latenzzeit nach I 'Verbot, da diese minimale Latenzzeit gemäß der Außentemperatur und / oder der Temperatur des Riemens (4) kalibriert werden kann, wird das Verbot des Stoppens oder Startens von der Startvorrichtung aufgehoben (2) dem Riemen (4) des Verbrennungsmotors (1) zugeordnet. 9. Kraftfahrzeug mit mindestens einem Verbrennungsmotor (1) und einer Startvorrichtung (2) mit einem Riemen (4), der die Startvorrichtung (2) mit dem

9. Verbrennungsmotor (1) verbindet, einer Steuereinheit Steuerung, die das Startelement (2) und den Verbrennungsmotor (1) steuert, **dadurch gekennzeichnet, dass** die Steuereinheit ein Präventionsverfahren gemäß einem der vorhergehenden Ansprüche durch Präsentieren von Mitteln implementiert zum Messen oder Schätzen der Temperatur des Riemens (4) Mittel zum Vergleichen der gemessenen oder geschätzten Temperatur des Riemens (4) mit einer kalibrierbaren Temperaturschwelle von mindestens unter 0°C gespeichert und Mittel zum Verbot des Stoppens oder Startens des Verbrennungsmotors (1) durch das dem Riemen (4) zugeordnete Startelement (2).

10. Kraftfahrzeug nach Anspruch 9, bei dem es sich um ein Hybridfahrzeug mit einem Antriebsmotor des Fahrzeugs außer dem Verbrennungsmotor (1) oder einem Fahrzeug handelt, das mit einem automatischen Stopp- und Neustartsystem des Verbrennungsmotors ausgestattet ist; das Fahrzeug hat einen anderen Anlasser als das Anlasserelement (2), das dem Riemen (4) zugeordnet ist, wobei das Anlasserelement (2) ein Generator-Anlasser ist.

## Claims

1. Method for preventing a risk of slipping of a belt (4) connecting a starter member (2) to an internal combustion engine (1) of a motor vehicle, the risk of slipping being liable to be produced by a deposit of frost on the belt (4), **characterized in that** the method comprises an estimate or a measurement (10) of a temperature of the belt (4) at a given time and if the temperature of the belt (4)) estimated or measured is below a calibratable temperature threshold at least below 0°C at this given moment, when the internal combustion engine (1) is running, it is prohibited to stop the engine (1) internal combustion or, when the internal combustion engine (1) is stopped, prohibiting the starting of the internal combustion engine (1) by the starting device (2) associated with the belt (4).

2. Prevention method according to claim 1, wherein an estimate is made of a quantity of water (7 to 9) retained on the belt (4), the quantity of water having to be greater than a minimum threshold for a ban stopping or starting the internal combustion engine (1).

3. A prevention method according to claim 2, wherein when the temperature of the belt (4) is estimated, the estimate takes into account an ambient temperature in the environment of the belt (4) and the temperature threshold is at less calibratable compared to a hygrometry of the outside air.

4. A prevention method according to claim 3, wherein, when the internal combustion engine (1) is running, the belt (4) and the engine (1) being housed in a space under the hood comprising a cooling front through which a flow passes. of air coming from outside the vehicle at a given speed and entering the space under the hood, the ambient temperature in the environment of the belt (4) is estimated as a function of at least one of the following parameters: given air flow speed, outside air temperature, engine temperature (1) and engine speed.

5. A prevention method according to claim 3, wherein, when the internal combustion engine (1) is stationary, the motor vehicle being running or stationary, the belt (4) and the engine (1) being housed in a space under the hood comprising a cooling facade crossed by a flow of air coming from outside the vehicle and entering the space under the hood at a given speed, this speed being substantially zero when the vehicle is stationary , the ambient temperature in the environment of the belt (4) is estimated as a function of at least one of the following parameters: the given air flow speed, the outside air temperature, the engine temperature (1), the time elapsed since the start of the engine shutdown (1) and the time the vehicle was last driven before the internal combustion engine (1) was shut down.

6. A prevention method according to any one of claims 2 to 5, wherein when the motor vehicle is traveling on a wet road which does not allow the belt (4) to dry out, the estimated amount of water on the belt (4) is a function of at least one of the following parameters: the speed of the vehicle (8), an amount of water on the road estimated according to a rain sensor and a speed of the windshield wipers of the vehicle (7) and an estimate of a water mist (9) produced by the passage of another motor vehicle preceding the motor vehicle on the road, with, when these parameters are taken together, a greater weighting given to the estimate of water mist (9).

7. A prevention method according to any one of claims 2 to 5, wherein, when the vehicle is stationary or when the motor vehicle is traveling on a road which has become dry or sufficiently low in humidity to allow the belt (4) to dry and defrost, with the internal combustion engine (1) running or not, the estimated quantity of water on the belt (4) is a function of at least one of the following parameters: the temperature of the engine (1), the temperature of the air in a space under the hood, the hygrometry of the air in a space under the hood, the time elapsed since the moment the vehicle was stopped or the moment of travel on a dry or sufficiently low-humidity road and the air speed in a space under the hood.

8. A prevention method according to any one of the preceding claims, wherein when the temperature of the belt (4) becomes greater than a calibratable temperature threshold greater than 0°C or at the end of a minimum latency period after I 'prohibition, since this minimum latency period can be calibrated according to the outside temperature and/or the temperature of the belt (4), the prohibition of stopping or starting is canceled by the starting device (2) associated with the belt (4) of the internal combustion engine (1). 9.

9. Motor vehicle comprising at least one internal combustion engine (1) and a starting device (2) with a belt (4) connecting the starting device (2) to the internal combustion engine (1), a control unit control controlling the starting member (2) and the internal combustion engine (1), **characterized in that** the control unit implements a prevention method according to any one of the preceding claims by presenting means for measuring or estimating the temperature of the belt (4), means for comparing the measured or estimated temperature of the belt (4) with a calibratable temperature threshold at least below 0°C stored and means for 'prohibition of stopping or starting of the internal combustion engine (1) by the starting member (2) associated with the belt (4).

10. Motor vehicle according to claim 9, which is a hybrid vehicle with a propulsion engine of the vehicle other than the internal combustion engine (1) or a vehicle equipped with an automatic stop and restart system of the internal combustion engine, the vehicle having a starter other than the starter member (2) associated with the belt (4), the starter member (2) being an alternator starter.
